Europäisches Patentamt

European Patent Office

Office européen des brevets

(11) Veröffentlichungsnummer: **0 189 517**
**B1**

(12) **EUROPÄISCHE PATENTSCHRIFT**

(45) Veröffentlichungstag der Patentschrifft:
21.03.90

(21) Anmeldenummer: 85110632.8

(22) Anmeldetag: 23.08.85

(51) Int. Cl. ⁵: **G 01 D 11/26**

(54) Antibeschlagvorrichtung für ein Schauglas eines Anzeigeinstruments.

(30) Priorität: 02.11.84 DE 3439958

(43) Veröffentlichungstag der Anmeldung:
06.08.86 Patentblatt 86/32

(45) Bekanntmachung des Hinweises auf die Patenterteilung:
21.03.90 Patentblatt 90/12

㊅ Bennante Vertragsstaaten:
DE FR GB IT

(56) Entgegenhaltungen:
DE-A-2 305 451
GB-A-819 750
US-A-2 830 671
US-A-3 049 668

(73) Patentinhaber: Dr.Ing.h.c. F. Porsche Aktiengesellschaft
Porschestrasse 42
D-7000 Stuttgart 40 (DE)

(72) Erfinder: Galgl, Dietmar, Dipl.-Ing.
Kantstrasse 26
D-7250 Leonberg (DE)
Erfinder: Amann, Klaus
Schellingstrasse 18
D-7255 Rutesheim (DE)

LIBERGRAF, STOCKHOLM 1990

**Beschreibung**

Die Erfindung betrifft eine Vorrichtung nach der Gattung des Hauptanspruchs.

In Anzeigeinstrumenten ist in der Regel ein mehr oder weniger abgeschlossenes Luftvolumen enthalten. Eine einmal eingedrungene Feuchtigkeit führt leicht zum Beschlagen eines Schauglases, mit dem eine Anzeigenfrontplatte des Anzeigeinstruments abgedeckt ist, insbesondere dann, wenn das Luftvolumen, z. B. durch Stromwärmeverluste der Bauteile des Anzeigeinstruments auf eine Temperatur aufgeheizt ist, die über der Umgebungslufttemperatur und damit über der Temperatur des Schauglases liegt.

Eine Anordnung zum Beseitigen eines Beschlags auf Schaugläsern von Instrumenten ist durch die US-PS-2 697 242 bekannt geworden. Hierbei ist das Schauglas drehbar im Instrumentengehäuse gelagert. Wird das Schauglas gedreht, so wird es über eine ortsfest mit dem Gehäuse verbundene Wischvorrichtung geführt.

Dieser Ausführung haftet der Nachteil an, daß die Beschlagsentfernung eine manuelle Betätigung erfordert, die zu einer Ablenkung einer Bedienperson führt. Außerdem sind keine Vorkehrungen getroffen, um ein Wiederbeschlagen zu verhindern.

Nachteilig ist ferner, daß durch die Wischvorrichtung die freie Sicht auf die Anzeige zumindest bereichsweise behindert ist.

Darüber hinaus ist es bekannt, Instrumentengehäuse von innen zu beheizen, z. B. nach der DE-AS-2 320 021 oder der DE-OS-2 131 919.

Mit diesen bekannten Vorrichtungen wird zwar vermieden, daß eventuell eingedrungene Feuchtigkeit dem Meßwerk, besonders bei Temperaturen unterhalb dem Gefrierpunkt, Schaden zufügt. Ein Beschlagen der kühleren Teile des Instrumentengehäuses bzw. eines Schauglases wird damit jedoch nicht verhindert, sondern im Gegenteil geradezu hervorgerufen.

Es ist daher Aufgabe der Erfindung, eine Antibeschlagvorrichtung für ein Schauglas eines Anzeigeinstrumentes zu schaffen, die einfach und kostengünstig herstellbar ist und mit der ein Beschlag auf dem Schauglas einfach, sicher und selbsttätig beseitigt werden kann und ein Wiederbeschlagen verhindert wird.

Die Aufgabe wird durch die Merkmale des Anspruchs 1 gelöst. Weitere, die Erfindung in vorteilhafter Weise ausgestaltende Merkmale sind in den abhängigen Ansprüchen enthalten.

Die Vorteile der Erfindung sind darin zu sehen, daß ein Beschlag auf einem Schauglas eines Anzeigeinstruments mit einer einfachen und kostengünstig herstellbaren Vorrichtung selbsttätig beseitigt und ein Wiederbeschlagen vermieden wird.

Durch eine Verwendung von sogenannten PTC-Elementen (d. h. Widerständen mit einem positiven Temperaturkoeffizienten) als elektrische Widerstandsheizung, wie sie auch zur Beheizung von Fahrzeugaußenspiegeln eingesetzt werden, kann auf handelsübliche Bauteile zurückgegriffen werden. Ferner ist durch die Beheizung der dem Schauglas abgewandten Seite der Anzeigenblende eine Anpassung der Anzeigeinstrumente meistens überflüssig, da dort in der Regel ohnehin genügend Raum für derartige Bauteile vorhanden ist. Aus diesem Grunde bietet sich die Vorrichtung ebenfalls zum Nachrüsten bestehender Anzeigeinstrumente an.

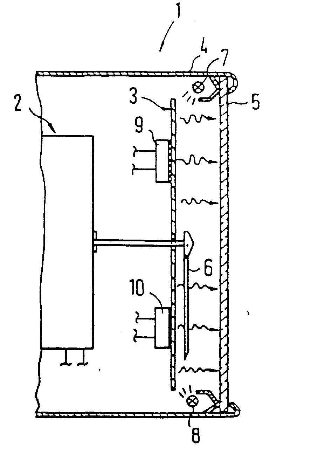

Die Erfindung wird anhand eines in der Zeichnung dargestellten Ausführungsbeispiels näher erläutert.

Hierbei ist ein Anzeigeinstrument 1 mit einem Zeigermeßwerk 2 gezeigt, wie es unter anderem bei Kraftfahrzeugen zur Anzeige einer Geschwindigkeit, einer Kühlmitteltemperatur oder eines Tankfüllstands angewendet wird. Das Zeigermeßwerk 2 und eine Anzeigenfrontplatte 3 sind innerhalb eines Gehäuses 4 angeordnet, das durch ein Schauglas 5 abgedeckt ist. Die Anzeigenfrontplatte 3 ist im allgemeinen in einem Flächenbereich, der von einem Zeiger 6 des Zeigermeßwerks 2 überstrichen wird, mit einer Skalierung versehen; das Schauglas 5 dient dem freien Blick auf die Anzeigenfrontplatte 3 und schützt diese und das Zeigermeßwerk 2 vor Beschädigung und Verschmutzung.

Das Gehäuse 4 ist auf der (nicht gezeigten) Rückseite in der Regel wenigstens teilweise geöffnet; die Gehäuseöffnungen können einer Durchführung von Anschlußleitungen oder einer Wärmeabfuhr dienen. Einmal in das Gehäuse 4 eingedrungene Feuchtigkeit wird von der Luft im Gehäuseinnenraum aufgenommen und mit dieser durch eine, während des Betriebes des Anzeigeinstrumentes vom Zeigermeßwerk 2 bzw. von Beleuchtungsorganen 7, 8 für die Anzeigenfrontplatte 3 erzeugte, Verlustwärme aufgeheizt. Das Schauglas 5 grenzt an seiner Außenseite an die - besonders im Winter - meist kühlere Umgebungsluft. Das Schauglas 5 ist somit kühler als die Luft im Gehäuseinnenraum und führt zu einem Niederschlag der in dieser Luft enthaltenen Feuchtigkeit auf der, dem Gehäuseinnenraum zugewandten, Seite des Schauglases 5.

Wird nun die Anzeigenfrontplatte 3 beheizt, so emittiert deren Oberfläche eine Wärmestrahlung, die von der Oberfläche des Schauglases 5 im Gehäuseinnenraum wenigstens teilweise absorbiert wird; auf diese Weise erwärmt sich das Schauglas auf der Innenseite, so daß der Beschlag verdunstet und ein Wiederbeschlagen sicher vermieden wird.

Da übliche Anzeigenfrontplatten in der Regel aus gut wärmeleitfähigem Material, z. B. Aluminium, hergestellt sind, kann die Anzeigenfrontplatte 3 von der, dem Schauglas 5 abgewandten Seite beheizt werden; dort ist häufig auch genügend Raum für eine Unterbringung von Heizelementen vorhanden. Besonders günstig ist es, wenn die dem Schauglas 5 zugewandte Seite dunkel eloxiert oder mit einem Material beschichtet ist, das einen hohen Wärmeemissionsgrad aufweist.

Zur Beheizung der Anzeigenfrontplatte 3 werden vorteilhaft elektrische Widerstandsheizelemente 9, 10 eingesetzt, die mit dieser verklebt, verlötet, verschweißt oder durch Klemmverbindung verbunden sind. Zur Temperaturbegrenzung kann auch eine thermostatische Regelung vorgesehen sein.

Besonders günstig ist es, Widerstandsheizelemente 9, 10 aus einem Material mit einem positiven Temperaturkoeffizienten des elektrischen Widerstands, sogenannte PTC-Elemente zu verwenden, wie sie auch zur Beheizung von Fahrzeugaußenspiegeln Verwendung finden. Dies hat den Vorteil, daß man auf vorhandene, handelsübliche Bauteile zurückgreifen und auf eine thermostatische Regelung verzichten kann, da diese Elemente die Eigenschaft besitzen, ihre Eigenerwärmung selbsttätig zu regeln.

Auf eine Darstellung einer elektrischen Verschaltung wurde der Einfachheit wegen verzichtet. Die Widerstandsheizelemente werden in einfacher Weise bei Inbetriebnahme des Anzeigeinstruments, d. h., bei Kraftfahrzeugen mit Einschalten der Zündung, mit einer Stromversorgung verbunden und bei Außerbetriebnahme von dieser getrennt.

## Patentansprüche

1. Antibeschlagvorrichtung für ein einer Anzeigenfrontplatte (3) eines Anzeigeinstrumentes (1) vorgelagertes Schauglas (5), das durch Absorption einer durch Beheizung der Anzeigenfrontplatte (3) von dieser emittierten Strahlungswärme erwärmbar ist, dadurch gekennzeichnet, daß eine Vorrichtung (9, 10) vorgesehen ist, die die Anzeigenfrontplatte (3) so beheizbar macht, daß ein Beschlagen des Schauglases (5) mit Feuchtigkeit verhindert wird.

2. Antibeschlagvorrichtung nach Anspruch 1, dadurch gekennzeichnet, daß die Anzeigenfrontplatte (3) Teil der Antibeschlagvorrichtung ist und aus wärmeleitfähigem Material hergestellt ist.

3. Antibeschlagvorrichtung nach wenigstens einem der Ansprüche 1 und 2, dadurch gekennzeichnet, daß die Anzeigenfrontplatte (3) Teil der Antibeschlagvorrichtung ist und auf der, dem Schauglas (5) abgewandten Seite beheizbar ist.

4. Antibeschlagvorrichtung nach wenigstens einem der Ansprüche 1 bis 3, dadurch gekennzeichnet, daß die Anzeigenfrontplatte (3) Teil der Antibeschlagvorrichtung ist und die dem Schauglas (5) zugewandte Oberfläche der Anzeigenfrontplatte (3) einen hohen Wärmeemissionsgrad aufweist.

5. Antibeschlagvorrichtung nach wenigstens einem der Ansprüche 1 bis 4, dadurch gekennzeichnet, daß die Anzeigenfrontplatte (3) Teil der Antibeschlagvorrichtung ist und thermostatisch beheizbar ist.

6. Antibeschlagvorrichtung nach wenigstens einem der Ansprüche 1 bis 5, dadurch gekennzeichnet, daß die Antibeschlagvorrichtung eine elektrischen Widerstandsheizung (9, 10) zur Beheizung der Anzeigenfrontplatte (3) umfaßt.

7. Antibeschlagvorrichtung nach Anspruch 6, dadurch gekennzeichnet, daß die elektrische Widerstandsheizung (9, 10) einen elektrischen Widerstand mit positivem Temperaturkoeffizienten aufweist.

8. Antibeschlagvorrichtung nach wenigstens einem der Ansprüche 6 und 7, dadurch gekennzeichnet, daß als Widerstandsheizung (9, 10) PTC-Elemente verwendet werden.

9. Antibeschlagvorrichtung nach wenigstens einem der Ansprüche 1 bis 8, dadurch gekennzeichnet, daß wenigstens die der Anzeigenfrontplatte (3) zugewandte Seite des Schauglases (5) auf eine Temperatur erwärmbar ist, die oberhalb einer Temperatur eines das Schauglas (5) auf dieser Seite umgebenden Mediums ist.

10. Antibeschlagvorrichtung nach wenigstens einem der Ansprüche 1 bis 8, dadurch gekennzeichnet, daß das Schauglas (5) auf eine Temperatur erwärmbar ist, die oberhalb eines Maximalwertes der Temperaturen der das Schauglas (5) umgebenden Medien liegt.

11. Antibeschlagvorrichtung nach wenigstens einem der Ansprüche 1 bis 10, dadurch gekennzeichnet, daß die Anzeigenfrontplatte während des Betriebs des Anzeigeinstrumentes beheizbar ist.

## Claims

1. An anti-misting device for an inspection glass (5) mounted in front of a display faceplate (3) of a display instrument (1) and heatable by absorption of radiation heat emitted by the display faceplate (3) when heated, characterized in that a device (9, 10) is provided which renders the display faceplate (3) heatable in such a way as to prevent the inspection glass (5) from becoming misted up with moisture.

2. An anti-misting device according to Claim 1, characterized in that the display faceplate (3) is part of the anti-misting device and is produced from heat-conducting material.

3. An anti-misting device according to at least one of Claims 1 and 2, characterized in that the display faceplate (3) is part of the anti-misting device end is heatable on the side remote from the inspection glass (5).

4. An anti-misting device according to at least one of Claims 1 to 3, characterized in that the display faceplate is part of the anti-misting device and the surface of the display faceplate (3) facing the inspection glass (5) has a high rate of heat emission.

5. An anti-misting device according to at least on of Claims 1 to 4, characterized in that the display faceplate (3) is part of the anti-misting device and is heatable thermostatically.

6. An anti-misting device according to at least one of Claims 1 to 5, characterized in that the anti-misting device comprises an electrical resistance heater (9, 10) for heating the display faceplate (3).

7. An anti-misting device according to Claim 6, characterized in that the electrical resistance heater (9, 10) comprises an electrical resistor with a positive temperature coefficient.

8. An anti-misting device according to at least one of Claims 6 and 7, characterized in that PTC elements are used as the resistance heater (9, 10). ·

9. An anti-misting device according to at least one of Claims 1 to 8, characterized in that at least the side of the inspection glass (5) facing the display faceplate (3) is heatable to a temperature which is above a temperature of a medium surrounding the inspection glass (5) on the said side.

10. An anti-misting device according to at least one of claims 1 to 8, characterized in that the inspection glass (5) is heatable to a temperature which is above a maximum value of the temperatures of the media surrounding the inspection glass (5).

11. An anti-misting device according to at least one of Claims 1 to 10, characterized in that the display faceplate is heatable during the operation of the display instrument.

**Revendications**

1. Dispositif antibuée pour une vitre d'instrument d'effichage (5) placée devant un panneau indicateur frontal (3) d'un instrument (1), qui est chauffé par absorption d'une chaleur rayonnée émise par le panneau indicateur frontal (3) par chauffage de celui-ci, caractérisé en ce qu'on prévoit un dispositif (9, 10) qui permet de chauffer le panneau indicateur frontal (3) de telle façon qu'un dépôt de buée sur la vitre (5) par l'humidité est empêché.

2. Dispositif antibuée selon la revendication 1, caractérisé en ce que le panneau indicateur frontal (3) fait partie du dispositif antibuée et est constitué par une matière thermiquement conductrice.

3. Dispositif antibuée selon l'une au moins des revendications 1 et 2, caractérisé en ce que le panneau indicateur frontal (3) fait partie du dispositif antibuée et peut être chauffé du côté opposé à la vitre d'observation (5).

4. Dispositif antibuée selon l'une au moins des revendications 1 à 3, caractérisé en ce que le panneau indicateur frontal constitue une partie du dispositif antibuée et que la surface du panneau indicateur frontal (3), située du côté de la vitre (5), présente un fort degré d'émission thermique.

5. Dispositif antibuée selon l'une au moins des revendications 1 à 4, caractérisé en ce que le panneau indicateur frontal (3) fait partie du dispositif antibuée et peut être chauffé thermostatiquement.

6. Dispositif antibuée selon l'une au moins des revendications 1 à 5, caractérisé en ce que le dispositif antibuée comprend un système de chauffage électrique par effet Joule (9, 10) pour chauffer le panneau indicateur frontal (3).

7. Dispositif antibuée selon la revendication 6, caractérisé en ce que le système de chauffage électrique par effet Joule (9, 10) comporte une résistance électrique à coefficient de température positif.

8. Dispositif antibuée selon les revendications 6 et 7, caractérisé en ce qu'on utilise, comme système de chauffage par effet Joule (9, 10), des éléments coefficient de température positif.

9. Dispositif antibuée selon l'une au moins des revendications 1 à 8, caractérisé en ce qu'au moins la face de la vitre de l'instrument (5) située du côté du panneau indicateur frontal (3) peut être chauffée à une température qui est supérieure à une température d'un milieu environnant la vitre (5) sur cette face.

10. Dispositif antibuée selon l'une au moins des revendications 1 à 8, caractérisé en ce que la vitre d'observation (5) peut être chauffée à une température supérieure à une valeur maximale des températures des milieux environnant la vitre (5).

11. Dispositif antibuée selon l'une au moins des revendications 1 à 10, caractérisé en ce que le panneau indicateur frontal (3) peut être chauffé pendant le fonctionnement de l'instrument.